(19) Europäisches Patentamt
European Patent Office
Office européen des brevets

(11) EP 4 521 076 A1

(12) EUROPÄISCHE PATENTANMELDUNG

(43) Veröffentlichungstag:
12.03.2025 Patentblatt 2025/11

(21) Anmeldenummer: 23196001.4

(22) Anmeldetag: 07.09.2023

(51) Internationale Patentklassifikation (IPC):
G01F 23/263 $^{(2022.01)}$ G01F 23/292 $^{(2006.01)}$
G01F 25/20 $^{(2022.01)}$

(52) Gemeinsame Patentklassifikation (CPC):
G01F 25/20; G01F 23/263; G01F 23/268;
G01F 23/2921

(84) Benannte Vertragsstaaten:
AL AT BE BG CH CY CZ DE DK EE ES FI FR GB GR HR HU IE IS IT LI LT LU LV MC ME MK MT NL NO PL PT RO RS SE SI SK SM TR
Benannte Erstreckungsstaaten:
BA
Benannte Validierungsstaaten:
KH MA MD TN

(71) Anmelder: ibidi GmbH
82166 Gräfelfing (DE)

(72) Erfinder: Zantl, Roman
85598 Baldham (DE)

(74) Vertreter: Grünecker Patent- und Rechtsanwälte PartG mbB
Leopoldstraße 4
80802 München (DE)

(54) **KALIBRIERUNGSVERFAHREN FÜR EIN FLÜSSIGKEITSSYSTEM**

(57) Die vorliegende Erfindung betrifft ein Kalibrierungsverfahren für ein Flüssigkeitssystem. Das Flüssigkeitssystem umfasst ein mit einer Flüssigkeit befülltes Reservoir, und einen Kapazitätssensor, der ausgebildet ist, eine elektrische Kapazität an dem Reservoir zu messen. Das Verfahren umfasst die folgenden Schritte: A) Bestimmen einer Füllhöhe der Flüssigkeit in dem Reservoir; B) Messen, mit dem Kapazitätssensor, der elektrischen Kapazität an dem Reservoir für die im Schritt A) bestimmte Füllhöhe der Flüssigkeit; C) Einstellen einer anderen Füllhöhe in dem Reservoir; D) Wiederholen der Schritte A) und B), und E) Ermitteln einer Relation zwischen den Füllhöhen in dem Reservoir und den gemessenen elektrischen Kapazitäten. Die vorliegende Erfindung stellt weiterhin ein Flüssigkeitssystem bereit.

FIG. 1

EP 4 521 076 A1

**Beschreibung**

Die nachfolgend beschriebene Erfindung betrifft ein Kalibrierungsverfahren für ein Flüssigkeitssystem, sowie das zugehörige Flüssigkeitssystem.

Ein Flüssigkeitssystem (mit Flüssigkeit befülltes System), insbesondere ein Mikrofluidsystem, besteht typischerweise aus zwei Reservoiren, die fluidisch über einen Kanal miteinander und mit einer Flusskammer verbunden sind, wobei die Flüssigkeit von einem Reservoir in das andere Reservoir durch den Druckunterschied zwischen den beiden Reservoiren angetrieben wird. Dabei kann der Druckunterschied durch zwei unabhängig voneinander regelbare Drücke in den Reservoiren hergestellt werden. Die Flüssigkeit wird durch die Flusskammer gepumpt und kann dort zum Beispiel als eine Nährlösung zur Zellkultivierung, aber auch für andere Anwendungen genutzt werden. Ein derartiges Flüssigkeitssystem ist beispielsweise aus der EP 1 944 084 A1 bekannt.

Bestehende Flüssigkeitssysteme beschränken sich zumeist darauf, den Druckunterschied zwischen den beiden Reservoiren so einzustellen, dass daraus ein gewünschter Fluss resultiert. Bestimmte veränderliche Flüsse (Flussraten) werden durch das Anlegen langsam veränderlicher Drücke eingestellt. Ein solcher Aufbau dient beispielsweise der Simulation von Bluthochdruck zur Untersuchung von Gefäßverengungen und Arteriosklerose. Um für die genannten Simulationen (und darüber hinausgehende Anwendungen) möglichst realistische Bedingungen bereitstellen zu können, ist es wichtig, dass der Fluss der Flüssigkeit genau bekannt ist. Insbesondere muss auch eine zeitliche Variation des Flusses schnell erfasst werden können.

Es ist eine Aufgabe der vorliegenden Erfindung, eine Möglichkeit bereitzustellen, den Fluss und ihren zeitlichen Verlauf in einem Fluidsystem präzise zu bestimmen. Zu diesem Zweck werden ein Kalibrierungsverfahren nach Anspruch 1 und ein Flüssigkeitssystem nach Anspruch 14 bereitgestellt. Weitergehende Ausführungsformen finden sich in den zugehörigen Unteransprüchen.

Erfindungsgemäß wird ein Kalibrierungsverfahren für ein Flüssigkeitssystem, insbesondere für ein Mikrofluidsystem, bereitgestellt. Dabei umfasst das Flüssigkeitssystem ein mit einer Flüssigkeit befülltes Reservoir und einen Kapazitätssensor, der ausgebildet ist, eine elektrische Kapazität an dem Reservoir zu messen. Das Verfahren umfasst die folgenden Schritte:

A) Bestimmen einer Füllhöhe der Flüssigkeit in dem Reservoir;
B) Messen, mit dem Kapazitätssensor, der elektrischen Kapazität an dem Reservoir für die im Schritt A) bestimmte Füllhöhe der Flüssigkeit;
C) Einstellen einer anderen Füllhöhe in dem Reservoir,
D) Wiederholen der Schritte A) und B), und
E) Ermitteln einer Relation zwischen den Füllhöhen in dem Reservoir und den gemessenen elektrischen Kapazitäten.

Damit wird in Schritt A) die Füllhöhe in dem Reservoir absolut bestimmt. Schritt B) entspricht einer relativen oder mittelbaren Bestimmung einer Füllhöhe über die Kapazitätsmessung.

Dieses Kalibrierungsverfahren kombiniert also eine relative Messung oder Bestimmung der Füllhöhe durch Messen einer elektrischen Kapazität mit einer absoluten Bestimmung der Füllhöhe. Ziel dieses Verfahrens ist es dabei, eine Relation oder einen funktionellen Zusammenhang zwischen der elektrischen Kapazität und der tatsächlichen (absoluten) Füllhöhe in dem Reservoir zu ermitteln. Dazu wird für zwei unterschiedliche Füllhöhen die zugehörige Kapazität bestimmt. Aus diesen Zusammenhängen lässt sich die gesuchte Relation zwischen den Füllhöhen und der elektrischen Kapazität ermitteln. Insbesondere lässt sich die Kapazität als eine Funktion der Füllhöhe ermitteln. Dieser Schritt der Ermittlung besagter Relation kann beispielsweise eine Interpolation oder Extrapolation umfassen. Aus der gefundenen Relation kann schließlich der Fluss hergeleitet und mit hoher Präzision bestimmt werden.

Unter einem Reservoir wird ein Behälter verstanden, der ausgebildet ist, Flüssigkeit zu speichern und gegebenenfalls über eine vorgesehene Öffnung aufzunehmen und wieder abzugeben. Das Reservoir kann beispielsweise zylindrisch sein, wobei sich in der Bodenfläche oder in der Mantelfläche die Öffnung befindet, durch die die Flüssigkeit in das Reservoir gepumpt oder aus dem Reservoir abgelassen wird.

Der Kapazitätssensor kann die elektrische Kapazität eines Teils oder des gesamten Reservoirs bestimmen. Dies hängt von der konkreten Geometrie des Reservoirs und des Kapazitätssensors und/oder deren relativer Anordnung ab. Entscheidend ist dabei, dass sich die gemessene Kapazität als Funktion der Füllhöhe in dem Reservoir verhält, sodass sich eine geänderte Füllhöhe auch in einer geänderten Kapazität widerspiegelt. Die Kapazität der Flüssigkeit kann von Eigenschaften wie Temperatur, Salzkonzentration oder Sauerstoffgehalt abhängen. Eine Kalibration aus einer Kapazitätsmessung alleine (Schritt B)) weist aus diesem Grund eine gewisse Ungenauigkeit auf. Die zweite Messung gemäß Schritt A) führt erlaubt eine Erhöhung der Präzision der Kalibrierung.

Der Kapazitätssensor kann beispielsweise zwei Leiterplatten umfassen, die einen Plattenkondensator ergeben, wobei zwischen den Leiterplatten das Reservoir oder zumindest ein Teil des Reservoirs angeordnet ist. Wenn das Reservoir mit einer Flüssigkeit befüllt wird, ändert sich die gemessene Kapazität mit der Füllhöhe, weil die elektrische Permeabilität (bzw. die Dielektrizitätskonstante) der Flüssigkeit höher ist als jene eines oberhalb der Flüssigkeit befindlichen Gases wie Luft. In einem Reservoir mit einer konstanten Querschnittsfläche verhält sich die Kapazität nahezu linear als eine Funktion der Füllhöhe.

Das Verfahren ist nicht auf ein einmaliges Wiederholen der Schritte A) und B) beschränkt. Vielmehr kann das Verfahren auch dadurch erweitert werden, dass in Schritt D) die Schritte A), B) und C) mehr als einmal wiederholt werden. Dies führt dazu, dass mehr Wertepaare aus Füllhöhe und Kapazität bestimmt, bzw. gemessen werden, was eine genauere Ermittlung der Relation zwischen den Füllhöhen in dem ersten Reservoir und den gemessenen Kapazitäten erlaubt. Zudem kann sich die Kalibration über einen größeren Wertebereich erstrecken.

Die Reihenfolge der Schritte des Verfahrens, insbesondere der Schritte A) und B) ist nicht festgelegt. In einer Weiterbildung können allerdings die Schritte des Verfahrens in der angegebenen Reihenfolge durchgeführt werden.

Die Wahl der Flüssigkeit selbst hängt vom speziellen Einsatzgebiet des Verfahrens und des Flüssigkeitssystems ab um schließt beispielsweise (destilliertes) Wasser, Nährlösung für Zellkulturen oder Blut ein.

Das Flüssigkeitssystem kann weiterhin ein zweites Reservoir umfassen, das mit einer Flüssigkeit befüllt ist. Dabei handelt es sich insbesondere um die gleiche Flüssigkeit wie in dem ersten Reservoir. Das Reservoir und das weitere Reservoir können über einen Kanal flüssigkeitsdicht verbunden sein, sodass das Reservoir und das weitere Reservoir bezüglich der Flüssigkeit kommunizierende Reservoire sind. Weiterhin kann jedes der beiden Reservoire gegenüber seiner Umgebung abgeschlossen sein und mit einer Flüssigkeit und Gas befüllt sein, wobei das Gas oberhalb der Flüssigkeit in dem jeweiligen Reservoir angeordnet und die beiden Phasen voneinander getrennt sind. Für dieses Flüssigkeitssystem kann Schritt A) des Verfahrens umfassen:

Bestimmen eines Druckunterschieds zwischen dem Gas in dem Reservoir und dem Gas in dem weiteren Reservoir, und
Bestimmen der Füllhöhe in dem Reservoir aus dem Differenzdruck.

Hier und im Folgenden, wenn das Flüssigkeitssystem zwei Reservoire umfasst, können das Reservoir als erstes Reservoir und das weitere Reservoir als zweites Reservoir bezeichnet werden. Insbesondere können die beiden Reservoire identische geometrische Abmessungen aufweisen und/oder in der gleichen Höhe bezüglich einer gemeinsamen Grundfläche angeordnet sein. Die nachfolgend gemachten Ausführungen beziehen sich zum Teil auf diese Annahmen.

Durch die Anordnung des Kanals, der die beiden Reservoire derart verbindet, dass die Reservoire bezüglich der Flüssigkeit kommunizierende Reservoire sind, kann die Flüssigkeit durch den Kanal zwischen den beiden Reservoiren hin und her strömen. Der Kanal ermöglicht einen Flüssigkeitsaustausch zwischen den beiden Reservoiren.

Die Bestimmung der Füllhöhe in dem ersten und dem zweiten Reservoir ergibt jeweils einen absoluten Wert für die Füllhöhe. Dieser Wert folgt aus einer Messung der Druckdifferenz, wobei sich aus der Druckdifferenz eine entsprechende Differenz in der Füllhöhe ergibt. Dabei ist die Bestimmung der Füllhöhe aus einem gemessenen Druck sehr präzise und erlaubt entsprechend eine Herleitung einer präzisen Relation zwischen Kapazität und Füllhöhe.

Zur Bestimmung der Druckdifferenz kann beispielsweise ein Differenzdrucksensor verwendet werden, der mit der Gasphase beider Reservoire verbunden ist und folglich den Druck in dem jeweiligen Reservoir und daraus die Differenz bestimmt. Alternativ kann auch in jedem Reservoir separat der Gasdruck bestimmt, beispielsweise mit einem geeigneten Drucksensor, und daraus die Differenz gebildet werden.

Die Bestimmung der Füllhöhe kann beispielsweise wie folgt bestimmt werden. Ausgangspunkt ist ein Zustand, in dem die Füllhöhe h in beiden Reservoiren gleich ist. Diese Füllhöhe wird als Referenz- oder Nullpunkt festgelegt, also beispielsweise h = 0 oder als $h_0$ bezeichnet, und die zugehörige Kapazität gemessen. Betrachtet wird danach ein Zustand, in dem die Füllhöhe in beiden Reservoiren unterschiedlich ist.

Der Druckunterschied $\Delta P$ ergibt sich aus der Differenz des Gasdrucks $P_1$ in dem ersten Reservoir und des Gasdrucks $P_2$ in dem zweiten Reservoir, also $\Delta P = P_1 - P_2$, insbesondere $\Delta P = |P_1 - P_2|$. Gemäß hydrostatischer Gesetzmäßigkeiten berechnet sich die Differenz $\Delta h$ in der Füllhöhe des ersten Reservoirs und des zweiten Reservoirs dann gemäß $\Delta h = \Delta P/(\rho g)$, wobei $\rho$ die Dichte der Flüssigkeit und g die Erdbeschleunigung bezeichnen. Wenn die beiden Reservoire die gleichen geometrischen Abmessungen, vor allem den gleichen Querschnitt besitzen, erhöht sich in einem der Reservoire die Füllhöhe und in dem anderen der beiden Reservoire verringert sich die Füllhöhe in gleichem Maße. Daher ist die ermittelte Höhendifferenz $\Delta h$ gerade das Doppelte der gesuchten Füllhöhe h: $h = \Delta h/2$. Nun wird zu dieser Füllhöhe h die Kapazität C gemessen (Schritt B)) und man erhält daraus ein Wertepaar.

Für die Kalibrierung kann ausgehend von einem Gleichgewichtszustand, in dem der Differenzdruck null ist, eine geänderte Füllhöhe eingestellt werden. Dies kann beispielsweise durchgeführt werden, indem man den Kanal schließt, die Füllhöhe damit in den Reservoiren unabhängig voneinander ändert und die Reservoire gegenüber ihrer Umgebung wieder verschließt. Danach wird der Kanal wieder geöffnet, sodass die beiden Reservoire miteinander kommunizieren. Wenn nun diese Öffnung des Kanals schnell durchgeführt wird, kann es vorkommen, dass die Füllhöhe in den beiden Reservoiren zu oszillieren beginnt. Die Oszillation ist gedämpft und die Frequenz und Art der Oszillation (unterdämpft oder überdämpft) hängen üblicherweise von Systemparametern wie dem Durchmesser des Kanals ab.

Das Verfahren kann weiterhin umfassen, dass der Druckunterschied nach einer Wartezeit nach dem Einstellen der Füllhöhe durchgeführt wird, insbesondere wenn das Flüssigkeitssystem einen Gleichgewichtszustand erreicht hat, in dem der Differenzdruck im Wesentlichen zeitlich konstant ist. Dies verbessert die Zuverlässigkeit der Bestimmung der Füllhöhe, da das Risiko verringert wird, dass die die Erfassung von Wertepaaren während einer Oszillation vorgenommen wird, wodurch die Werte verfälscht werden könnten.

Darüber hinaus kann der Druckunterschied an mehreren Zeitpunkten nach der Wartezeit gemessen werden und über die mehreren Zeitpunkte gemittelt werden.

Die Mittelung kann beispielsweise ein geometrisches, arithmetisches oder harmonisches Mittel sein. Insgesamt verbessert sich durch die Mittelung von Messwerten mehrerer Zeitpunkte die Genauigkeit der Messung und daraus die Genauigkeit der Kalibration. Die Mittelung findet wie gesagt statt, wenn das Flüssigkeitssystem den Gleichgewichtszustand im Wesentlichen oder nahezu erreicht hat. Darunter ist zu verstehen, dass die Amplitude der Oszillationen in der Füllhöhe unter einen vorgegebenen Wert abfällt (die Amplitude der Oszillationen nimmt exponentiell mit der Zeit ab und nähert sich daher asymptotisch dem Gleichgewichtszustand. In der Realität ist es aber ausreichend, wenn die Amplitude unterhalb des vorbestimmten Werts ist). Andernfalls würde wegen der Oszillationen in der Füllhöhe auch eine zeitliche Mittelung über mehrere Zeitpunkte zu einem verfälschten Ergebnis führen.

Die oben beschriebenen Verfahren können weiterhin umfassen:

Abschätzen eines durch die unterschiedliche Füllhöhe in den beiden Reservoirs erwarteten Drucks;
Anlegen eines Gasdrucks an dem Reservoir; und
Öffnen des weiteren Reservoirs zu einer Umgebung, sodass ein dortiger Gasdruck dem Atmosphärendruck entspricht,
wobei der an dem Reservoir angelegte Gasdruck dem durch die unterschiedliche Füllhöhe abgeschätzten Druck entspricht.

Durch die Maßnahmen kann die Wartezeit, die benötigt wird, bis nach der Änderung der Füllhöhe ein neuer Gleichgewichtszustand erreicht ist, verringert werden. Dies liegt daran, dass die zuvor beschriebenen Oszillationen unterdrückt werden, indem ein externer Druck angelegt wird, der dem durch die Differenz der Füllhöhe in den beiden Reservoiren möglichst genau entspricht. Der gesamte Kalibrierungsprozess kann folglich beschleunigt werden.

Das eingangs beschriebene Flüssigkeitssystem kann auch derart gestaltet sein, dass es eine an dem Reservoir angeordnete Lichtschranke umfasst, die in einer ersten bekannten Höhe angeordnet ist, wobei die Lichtschranke eine Lichtquelle und einen Lichtsensor umfasst. In diesem Fall kann das Verfahren vorsehen, dass Schritt A) ein Einstellen der Füllhöhe in dem Reservoir auf eine bekannte Höhe umfasst, und dass Schritt C) ein Ändern der Füllhöhe der Flüssigkeit in dem Reservoir, sodass die Füllhöhe in dem Reservoir der ersten bekannten Höhe der Lichtschranke entspricht, umfasst.

Die erste bekannte Höhe bezeichnet jene Höhe, auf der die Lichtschranke angeordnet ist. Diese Höhe bzw. ihr Wert ist bekannt. Die Schritt A) eingestellte bekannte Höhe ist einem Anwender (oder einem entsprechenden Computersystem) durch eine vorausgehende Bestimmung bekannt. Beispielsweise handelt es sich dabei um den zuvor genannten Referenzpunkt $h_0$. Eine andere Möglichkeit besteht in einer Füllvorschrift für einen Anwender, bei der eine bestimmte Menge Flüssigkeit in das Reservoir gegeben wird, was einer gewissen Füllhöhe entspricht. Die Füllhöhe kann auch manuell ausgemessen werden. Insbesondere handelt es sich bei der ersten bekannten Höhe der Lichtschranke nicht um den Referenzpunkt $h_0$.

Die Lichtquelle und der Lichtsensor können dabei eine horizontale Ebene bilden, die parallel zu einer Oberfläche der Flüssigkeit in dem Reservoir liegt.

Die Lichtschranke kann so ausgebildet sein, dass erfasst wird, wenn die Füllhöhe der Flüssigkeit im Reservoir die Höhe, oder anders gesagt die horizontale Ebene, der Lichtschranke erreicht. Eine beispielhafte Anordnung ist derart, dass auf einer Seite des Reservoirs die Lichtquelle angeordnet ist, und auf der gegenüberliegenden Seite des Reservoirs befindet sich der Lichtsensor, wobei das Licht aus der Lichtquelle auf den Lichtsensor fällt. Hierzu ist eine Laserdiode besonders geeignet, da sie einen gebündelten Lichtstrahl mit ausreichend hoher Leistung bereitstellen kann. Befindet sich keine Flüssigkeit auf der Höhe der Lichtschranke in dem Reservoir, wird vom dem Lichtsensor eine bestimmte Lichtleistung gemessen. Befindet sich hingegen Flüssigkeit auf der Höhe der Lichtschranke (oder ist die Füllhöhe größer als die Höhe der Lichtschranke), wird die von dem Lichtsensor detektierte Leistung durch Absorption und/oder Streuung reduziert.

Alternativ kann die Lichtschranke so ausgebildet sein, dass die Lichtquelle und der Lichtsensor nebeneinander auf derselben Seite des Reservoirs angeordnet sind. Das Licht wird durch das Reservoir geschickt und auf der gegenüberliegenden Seite von einem Reflektor, beispielsweise einem Spiegel, zurück durch das Reservoir und auf den Lichtsensor reflektiert. Die Funktion der Lichtschranke ist dabei so wie im vorausgehend genannten Beispiel, aber die Lichtschranke kann kostengünstiger sein und eine Halterung für das Reservoir kann einfacher gestaltet sein. Eine derartige Anordnung aus Lichtquelle und Lichtsensor kann beispielsweise auf einem PCB-Board angeordnet/vorgesehen sein.

Neben dem beschriebenen Verfahren mittels Druckdifferenz stellt der Einsatz einer Lichtschranke eine alternative Möglichkeit zur Bestimmung der (absoluten) Füllhöhe in dem Reservoir dar. Ein Vorteil besteht darin, dass kein abgeschlossenes Flüssigkeitssystem zur Bestimmung der Füllhöhe benötigt wird, sondern das Reservoir auch gegenüber seiner Umgebung geöffnet sein kann. Zudem kann die Kalibration auch an nur einem einzigen Reservoir durchgeführt werden. Dazu verwendet man als Ausgangspunkt einen Zustand, in dem die Füllhöhe h in dem Reservoir bekannt ist und misst die zugehörige Kapazität. Nun wird die Füllhöhe derart angepasst, dass sie in der Ebene der Lichtschranke liegt, und misst erneut die Kapazität. Man erhält daraus zwei Wertepaare für die Füllhöhe in dem Reservoir und die Kapazität und kann daraus die gesuchte Relation ermitteln.

Die Lichtschranke kann auch derart ausgebildet sein, dass sie einen weiteren Lichtsensor umfasst, wobei die der weitere Lichtsensor in auf der gleichen Höhe wie die Lichtquelle und der Lichtsensor derart angeordnet sind, dass Licht von der Lichtquelle auf den Lichtsensor fällt, wenn keine Flüssigkeit in dem ersten Reservoir in der Ebene vorliegt, und dass Licht von der Lichtquelle auf den weiteren Lichtsensor fällt, wenn Flüssigkeit in dem ersten Reservoir in der Ebene vorliegt.

Diese Konfiguration der Lichtschranke erzeugt ein noch deutlicheres Signal, wenn die Flüssigkeit die bekannte Höhe der Lichtschranke passiert. Infolge der Brechung des Lichts durch die Flüssigkeit, fällt Licht auf den zweiten Lichtsensor und die von dem ersten Lichtsensor gemessene Lichtleistung verringert sich entsprechend. Dabei ist der Anteil des gebrochenen Lichts in der Regel höher als die Streuung und/oder Absorption in der Flüssigkeit, sodass sich die Differenz in der Lichtleistung auf dem ersten Sensor erhöht. Darüber hinaus hat man ein Messsignal auf dem zweiten Sensor, das als Verifikation der vorhandenen Flüssigkeit dienen kann.

Das Flüssigkeitssystem kann auch in der Konfiguration mit einer Lichtschranke am Reservoir ein weiteres Reservoir und einen Kanal umfassen. Das Reservoir und das weitere Reservoir können über den Kanal flüssigkeitsdicht verbunden sein, sodass das Reservoir und das weitere Reservoir bezüglich der Flüssigkeit kommunizierende Reservoire sind, sodass insbesondere die Flüssigkeit durch den Kanal zwischen dem Reservoir und dem weiteren Reservoir strömen kann. Auch hier können das Reservoir und das weitere Reservoir entsprechend als erstes und zweites Reservoir bezeichnet werden.

In diesem Fall wählt man als Ausgangspunkt den Zustand, in dem die Füllhöhe h in beiden Reservoiren gleich ist. Diese Füllhöhe wird als Referenz- oder Nullpunkt festgelegt, also beispielsweise h = 0 oder als $h_0$ bezeichnet, und die zugehörige Kapazität wird gemessen. Nun wird analog die Füllhöhe derart angepasst, dass sie in der Ebene der Lichtschranke liegt, und misst erneut die Kapazität.

Wenn die beiden kommunizierenden Reservoire die gleiche Geometrie aufweisen, entspricht die Differenz in der Füllhöhe zwischen dem Ausgangszustand und dem Zustand in dem ersten Reservoir jener Differenz in dem zweiten Reservoir (mit umgekehrtem Vorzeichen). Folglich ist auch die Füllhöhe im zweiten Reservoir bekannt.

An dem ersten Reservoir kann eine weitere bzw. zweite Lichtschranke in einer zweiten bekannten Höhe angeordnet werden, wobei die Lichtschranke und die zweite Lichtschranke ansonsten die gleichen Eigenschaften aufweisen. Das Verfahren kann folglich dahingehend erweitert werden, dass eine weitere Füllhöhe in dem Reservoir eingestellt wird, die der zweiten bekannten Höhe entspricht und die zugehörige Kapazität gemessen wird. Man erhält also mehr Wertepaare aus Füllhöhe und Kapazität, was eine genauere Kalibrierung ermöglicht.

Der analoge Vorteil kann erreicht werden, wenn die weitere bzw. zweite Lichtschranke in einer zweiten bekannten Höhe an dem zweiten Reservoir angeordnet ist. Da die Änderung der Füllhöhe in den Reservoiren um den Nullpunkt betragsgleich ist, kann für die zweite bekannte Höhe ebenfalls eine Messung der Kapazität und Ermittlung eines Wertepaars vorgenommen werden. Für jede zusätzliche Lichtschranke an dem Flüssigkeitssystem kann also ein weiteres Wertepaar ermittelt und die Kalibration damit verfeinert werden.

Es ist auch denkbar, an dem ersten oder dem zweiten Reservoir weitere Lichtschranken, zusätzlich zu der ersten und zweiten Lichtschranke, anzuordnen. Diese weiteren Lichtschranken sind in weiteren bekannten Höhen angeordnet und ermöglichen, wie zuvor beschrieben, die Bestimmung eines Wertepaares aus Kapazität und Füllhöhe, wenn die Füllhöhe dem bekannten Werte der Höhe der zugehörigen Lichtschranke entspricht.

Die Lichtschranke kann unterhalb des Ausgangspunkts angeordnet sein und insbesondere zur Feststellung des Leerlaufens des Reservoirs genutzt werden. Dazu kann, wenn registriert wird, dass die Füllhöhe auf die Höhe der Lichtschranke gefallen ist, entsprechend eingestellt werden, dass keine weitere Flüssigkeit aus dem Reservoir entnommen wird. Ein Nachteil eines leergelaufenen Reservoirs besteht beispielsweise darin, dass die Flüssigkeit nicht mehr in Richtung des zweiten Reservoirs gepumpt werden kann, wenn das erste Reservoir leer ist. Für Zellkultivierung steht in diesem Fall keine Nährlösung mehr bereit oder sie muss in die entgegengesetzte Richtung gepumpt werden, was die Kultivierungsbedingungen ändern oder negativ beeinflussen kann.

Das eingangs beschriebene Flüssigkeitssystem kann auch eine an dem Reservoir angeordnete Kapazitätsschranke aufweisen, die in einer ersten bekannten Höhe angeordnet ist. In diesem Fall kann das Verfahren vorsehen, dass Schritt A) das Einstellen der Füllhöhe in dem Reservoir auf eine bekannte Höhe, umfasst, und dass Schritt C) das Ändern der Füllhöhe der Flüssigkeit in dem Reservoir, sodass die Füllhöhe in dem Reservoir der ersten bekannten Höhe der Kapazitätsschranke entspricht, umfasst.

Bezüglich der bekannten Höhe und der ersten bekannten Höhe der Kapazitätsschranke gelten die analogen Erwägungen wie im Zusammenhang mit der Lichtschranke.

Unter einer Kapazitätsschranke wird eine Vorrichtung verstanden, mit der eine Änderung der Füllhöhe durch eine starke Änderung der Kapazität detektiert werden kann. Der Vorteil einer Kapazitätsschranke, beispielweise gegenüber einer Lichtschranke, liegt darin, dass sie einfach und kostengünstig herstellbar ist und weniger anfällig für Dejustage und Verschmutzung ist.

Darüber hinaus können die beschriebenen Eigenschaften des Flüssigkeitssystems mit einer oder mehreren Lichtschranken analog auf ein Flüssigkeitssystem mit einer oder mehreren Kapazitätsschranken übertragen werden. Die beschriebenen Vorteile ergeben sich in gleicher Weise.

Das Kalibrierungsverfahren kann als Grundlage dienen, einen Fluss aus dem Reservoir, beziehungsweise zwischen dem Reservoir und dem weiteren Reservoir, in einem dynamischen Flüssigkeitssystem, in dem sich die Füllhöhe der Flüssigkeit in den beiden Reservoiren zeitlich ändert, zu ermitteln. Diese Ermittlung basiert auf der zuvor ermittelten Relation zwischen den Füllhöhen in dem Reservoir und den gemessenen elektrischen Kapazitäten, sowie einem zeitlichen Verlauf der von dem Kapazitätssensor gemessenen elektrischen Kapazität. Weiterhin müssen die geometrischen Abmessungen des Reservoirs bekannt sein, insbesondere die Querschnittsfläche A.

Zunächst kann durch Interpolation (lineare Interpolation, Spline-Interpolation etc.) und/oder Extrapolation ein funktionaler Zusammenhang zwischen der bestimmten Füllhöhe und der gemessenen Kapazität ermittelt werden. Falls zwei Wertepaare für die Füllhöhe und Kapazität vorliegen, ist eine lineare Interpolation angezeigt, falls mehr Wertepaare vorliegen, können auch andere Interpolations- und/oder Extrapolationsverfahren zur Anwendung kommen. Auf diese Weise erhält man die Kapazität C als eine Funktion der Füllhöhe h (geschrieben als C(h)). In einem dynamischen Flüssigkeitssystem ist die Füllhöhe h(t) eine Funktion der Zeit t und entsprechend wird auch die Kapazität eine Funktion der Zeit: C(t).

Der Fluss $\Phi$ bezeichnet eine Volumenänderung pro Zeiteinheit, in vorliegendem Falls also die Menge der Flüssigkeit, die in einer bestimmten Zeit aus dem Reservoir oder in das Reservoir strömt. Da das Volumen das Produkt aus

$$\Phi = A \cdot \frac{d}{dt} h(t)$$

der Höhendifferenz zwischen zwei Zeitpunkten und der Querschnittsfläche A ist, folgt .

Schließlich erhält man unter Berücksichtigung der ermittelten Relation aus den Füllhöhen und den zugehörigen

$$\Phi(t) = A \cdot B \cdot \frac{d}{dt} C(t)$$

Werten für die Kapazität den Fluss aus der Gleichung , wobei B ein Kalibrationsfaktor ist, der sich aus der ermittelten Relation ergibt. Der Fluss ist folglich eine Funktion der elektrischen Kapazität und der Zeit.

Die vorliegende Erfindung stellt weiterhin ein Flüssigkeitssystem bereit, das ein erstes mit einer Flüssigkeit befülltes Reservoir, ein zweites mit einer Flüssigkeit befülltes Reservoir, und einen Kanal umfasst, wobei der Kanal das erste Reservoir und das zweite Reservoir flüssigkeitsdicht verbindet, sodass das erste Reservoir und das zweite Reservoir bezüglich der Flüssigkeit kommunizierende Reservoire sind. Weiterhin umfasst das Flüssigkeitssystem einen Kapazitätssensor, der ausgebildet ist, die elektrische Kapazität an dem ersten Reservoir und/oder dem zweiten Reservoir zu messen. Das Flüssigkeitssystem umfasst weiterhin eines von einem Differenzdrucksensor zur Messung einer Druckdifferenz zwischen dem ersten Reservoir und dem zweiten Reservoir, einer Lichtschranke, die in einer ersten bekannten Höhe an dem ersten Reservoir oder dem zweiten Reservoir angeordnet ist und eine Lichtquelle und einen Lichtsensor umfasst, und einer Kapazitätsschranke, die in einer ersten bekannten Höhe an dem ersten Reservoir oder dem zweiten Reservoir angeordnet ist. Zuletzt umfasst das Flüssigkeitssystem eine Steuerungseinheit, die ausgebildet ist, das zuvor beschriebene Verfahren an einem Flüssigkeitssystem mit zwei Reservoiren durchzuführen.

Abhängig von der Art des beschriebenen Verfahrens umfasst das Flüssigkeitssystem einen Differenzdrucksensor, eine Lichtschranke oder eine Kapazitätsschranke. Es ist allerdings möglich, mehr als eines dieser genannten Elemente in einem Flüssigkeitssystem vorgesehen zu haben.

Die Steuerungseinheit kann ein Computer mit einer entsprechenden Programmierung sein, sodass die beschriebenen Schritte im Kalibrierungsverfahren durchgeführt werden können. Zudem kann die Steuerungseinheit mit Einrichtungen des Flüssigkeitssystems verbunden sein, beispielsweise dem Kapazitätssensor, einem Differenzdrucksensor, einer Lichtschranke und einer Kapazitätsschranke, um die Schritte des beschriebenen Verfahrens durchführen zu können.

Die Steuerungseinheit kann einen Speicher umfassen, in dem Kalibrationsparameter und/oder andere Parameter und Werte abgespeichert werden können.

Das Flüssigkeitssystem mit der Steuerungseinheit ist folglich in der Lage, die Kalibrierung automatisiert durchzuführen, indem die Schritte in einem Computer implementiert sind. Manuelle Schritte, die von einem Anwender durchgeführt werden müssen, sind dadurch nicht notwendig.

Das Flüssigkeitssystem kann weiterhin eine Pumpe aufweisen, die ausgebildet ist, die Flüssigkeit zwischen dem ersten Reservoir und dem zweiten Reservoir zu transportieren. Dabei ist die Pumpe insbesondere derart ausgebildet, dass sie die Flüssigkeit in beide Richtungen transportieren kann, also von dem ersten Reservoir in das zweite Reservoir und von dem zweiten Reservoir in das erste Reservoir. Zudem kann das Flüssigkeitssystem über einen Mikrofluidchip verfügen, der von der Flüssigkeit durchströmt wird.

Die Pumpe kann eine erste Druckvorrichtung, insbesondere eine Luftdruckpumpe, eine Kolbenpumpe, eine Membranpumpe, eine Schlauchquetschpumpe, eine Spritze oder eine Spritzenpumpe, aufweisen, um das erste Reservoirs mit Druck zu beaufschlagen. Die Druckvorrichtung kann je nach Art der Anwendung und Umgebungsbedingungen geeignet gewählt werden. So kann beispielsweise eine Spritzenpumpe gewählt werden, wenn die Ventilvorrichtungen eigengesteuerte Rückschlagventile aufweisen. Die Pumpe kann eine zweite Druckvorrichtung, insbesondere Druckpumpe, eine Kolbenpumpe, eine Membranpumpe, eine Schlauchquetschpumpe, eine Spritze oder eine Spritzenpumpe, aufweisen, um das zweite Reservoirs mit Druck zu beaufschlagen.

Mit Druck wird sowohl ein Überdruck als auch ein Unterdruck gemeint. Bei einem Unterdruck würde das Fluid somit angesaugt werden.

Insbesondere können eine oder beide der zuvor beschriebenen Druckvorrichtungen über einen, wenigstens teilweise, gasgefüllten Fluidkanal, beispielsweise einen Schlauch, mit einem jeweiligen Reservoir derart verbunden sein, dass das jeweilige Reservoir mit Druck beaufschlagbar ist.

Insbesondere kann die Pumpe derart ausgebildet sein, dass das zweite Reservoir mit einem Unterdruck beaufschlagbar ist, während die erste Druckvorrichtung das erste Reservoir mit einem Überdruck beaufschlagt.

Ein Mikrofluidchip kann einen Kanal oder ein Kanalsystem aufweisen, der/das von der Flüssigkeit durchströmt wird. In dem Mikrofluidchip befinden sich beispielsweise Zellkulturen oder Gewebeproben, deren Verhalten unter einem bestimmten Fluss studiert werden soll. Beispielsweise kann es sich um einen Zellkulturträger mit mindestens einem Reservoir und mindestens einem Kanal handeln.

Das Flüssigkeitssystem bietet also die Möglichkeit, biologische Simulationen unter präzise kontrollierbaren Bedingungen durchzuführen.

Darüber hinaus kann die Steuerungseinheit ausgebildet sein, den Fluss durch den Mikrofluidchip mithilfe einer Regelschleife zu regeln. Durch die Implementierung einer Regelschleife zwischen dem Kapazitätssensor, der Steuerungseinheit und der Pumpe kann der Fluss aktiv geregelt werden.

Weitere Merkmale und Vorteile werden nachfolgend anhand der beispielhaften Figuren erläutert. Dabei zeigen:

Figur 1    ein erstes beispielhaftes Flüssigkeitssystem zur Durchführung des beschriebenen Kalibrierungsverfahrens;

Figur 2    ein zweites beispielhaftes Flüssigkeitssystem zur Durchführung des beschriebenen Kalibrierungsverfahrens;

Figur 3A    eine schematische Darstellung einer Kapazitätsschranke an einem Reservoir;

Figur 3B    eine schematische Darstellung einer alternativen Kapazitätsschranke an einem Reservoir;

Figur 3C    eine schematische Darstellung einer alternativen Kapazitätsschranke an einem Reservoir;

Figur 3D    eine beispielhafte Messung der Kapazität als Funktion der Füllhöhe mit einer solchen Kapazitätsschranke;

Figur 4A    eine schematische Illustration eines ersten Schritts eines erfindungsgemäßen Kalibrierungsverfahrens;

Figur 4B    eine schematische Illustration eines zweiten Schritts eines erfindungsgemäßen Kalibrierungsverfahrens;

Figur 4C    ein beispielhaftes Diagramm zur Ermittlung einer Relation zwischen gemessener Kapazität und Füllhöhe;

Figur 5A    ein erfindungsgemäßes Flüssigkeitssystem gemäß einer ersten Ausführungsform, und

Figur 5B    ein erfindungsgemäßes Flüssigkeitssystem gemäß einer zweiten Ausführungsform.

Im Folgenden und in den Figuren werden in den verschiedenen Ausführungsbeispielen, sofern nicht anders spezifiziert, die gleichen Bezugszeichen für gleiche oder entsprechende Elemente verwendet.

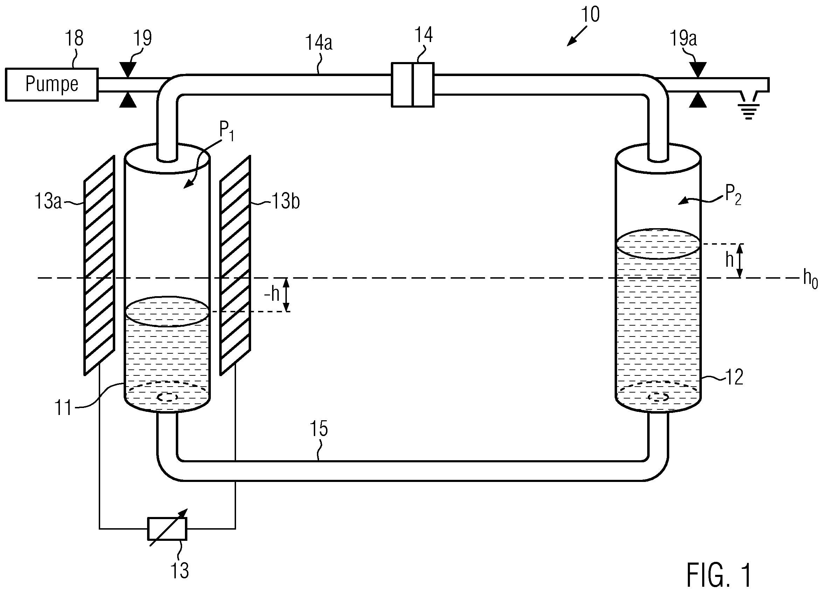

Figur 1 zeigt ein Flüssigkeitssystem 10 gemäß einem ersten Beispiel, an dem das zuvor beschriebene Kalibrierungsverfahren durchgeführt werden kann. Das Flüssigkeitssystem 10 umfasst ein Reservoir 11 und ein weiteres Reservoir 12. Im Folgenden werden die Reservoire entsprechend als erstes Reservoir 11 und als zweites Reservoir 12 bezeichnet. Beide Reservoire sind mit einer Flüssigkeit befüllt. Oberhalb des Flüssigkeitsspiegels in den beiden Reservoiren befindet sich ein Gas, beispielsweise Luft.

Das erste Reservoir 11 besitzt die Form eines Zylinders. Insbesondere weisen das erste Reservoir 11 und das zweite Reservoir 12 die gleichen Abmessungen auf, sind also baugleich. Zudem befinden sich die beiden Reservoire auf einer gleichen Höhe bezüglich einer Referenzebene. Vorzugsweise sind die beiden Reservoire transparent und/oder elektrisch isolierend. Ein transparentes Reservoir hat den Vorteil, dass ein Benutzer des Flüssigkeitssystems 10 einen besseren Überblick über die Flüssigkeitsstände hat und manuelle Messungen durchführen kann. Ein elektrisch isolierendes Reservoir ist für die nachfolgend illustrierte Kapazitätsmessung vorteilhaft, aber nicht zwingend notwendig.

Die beiden Reservoire sind durch einen Kanal 15 flüssigkeitsdicht miteinander verbunden, sodass das erste Reservoir 11 und das zweite Reservoir 12 bezüglich der Flüssigkeit kommunizierende Reservoire sind. Mit anderen Worten kann die Flüssigkeit zwischen den beiden Reservoiren und in beide Richtungen fließen, und sonst über keinen anderen Pfad. Dabei befindet sich der Eingang in den Kanal 15 in der Bodenfläche des jeweiligen Reservoirs.

An dem ersten Reservoir 11 ist ein Kapazitätssensor 13 angeordnet, der ausgebildet ist, eine elektrische Kapazität an dem ersten Reservoir 11 zu messen. Im gezeigten Beispiel umfasst der Kapazitätssensor 13 zwei Leiterplatten 13a und 13b, die parallel zueinander angeordnet sind, sodass das erste Reservoir 11 zwischen den beiden Leiterplatten 13a, 13b angeordnet ist. Die beiden Leiterplatten bilden folglich einen Plattenkondensator mit dem darin angeordneten ersten Reservoir 11. Die beiden Leiterplatten 13a, 13b können derart geformt sein, dass sie das erste Reservoir 11 entlang seiner ganzen Höhe umgeben. Es kann aber auch wie im gezeigten Beispiel sein, dass die Leiterplatten 13a, 13b nur einen Abschnitt der ganzen Höhe des ersten Reservoirs 11 umgeben. Es gilt lediglich zu beachten, dass es vorteilhaft sein kann, wenn die Leiterplatten jenen Höhenbereich des ersten Reservoirs umgeben, in dem sich die Flüssigkeit im Betrieb für gewöhnlich befindet. Die beiden Leiterplatten 13a, 13b sind mit einer Messeinheit verbunden, die die elektrische Kapazität des Plattenkondensators bestimmt.

Der Kapazitätssensor 13 kann auch anders gestaltet sein. Geeignete Kapazitätssensoren sind zum Beispiel "FDC1004 4-channel Capacitance-to-Digital Converter for Capacitive Sensing Solutions" von Texas Instruments und "AD7745/AD7746 24-Bit Capacitance-to-Digital Converter" von Analog Devices. Typische Messsignale liegen im Bereich zwischen 0,01 und 10 pF (Picofarad).

Da die Flüssigkeit eine höhere elektrische Permittivität als das Gas aufweist, ändert sich die Kapazität des Plattenkondensators mit einer Änderung der Füllhöhe der Flüssigkeit. Dabei ist die Kapazität etwa proportional zur Füllhöhe. Trotzdem hängt der genaue Wert der Kapazität von den Eigenschaften der Flüssigkeit wie Temperatur, Salzkonzentration oder Sauerstoffgehalt ab. Daher wird zur Verbesserung der Genauigkeit eine Kalibration der Kapazität als Funktion der Füllhöhe vorgenommen. Dies kann mit dem beschriebenen Verfahren effizient bewerkstelligt werden.

Das Flüssigkeitssystem 10 weist weiterhin einen Differenzdrucksensor 14 auf. Jedes der beiden Reservoire weist in dessen Deckelfläche einen Eingang in einen Gaskanal 14a auf, der jeweils mit dem Differenzdrucksensor 14 verbunden ist. Auf diese Weise ist der Differenzdrucksensor 14 in der Lage, einen Druckunterschied des Gases in dem ersten Reservoir 11 und dem zweiten Reservoir 12 zu messen. Die Gasphase der beiden Reservoire ist nicht über den Gaskanal 14a verbunden, sondern durch den Differenzdrucksensor 14 separiert. Es findet demnach kein Gasaustausch zwischen den beiden Reservoiren statt. Das gezeigte Flüssigkeitssystem 10 ist also gegenüber seiner Umgebung abgeschlossen.

Anstelle eines Differenzdrucksensors 14 kann der Druck auch in beiden Reservoiren separat gemessen werden, indem das erste Reservoir 11 und das zweite Reservoir 12 jeweils über einen Drucksensor zur Messung des Gasdrucks verfügen. Der Differenzdruck ergibt sich dann aus der Differenz der gemessenen Drücke.

In der Figur ist eine Höhe $h_0$ eingezeichnet. Diese Höhe bezeichnet die Füllhöhe der Flüssigkeit in einem Gleichgewichtszustand, wenn die Gasdrücke P1 (im ersten Reservoir 11) und P2 (im zweiten Reservoir 12) identisch sind, beispielsweise wenn die Reservoire gegenüber der Umgebung geöffnet sind, sodass Atmosphärendruck herrscht. Diese Höhe kann als Referenz- oder Nullpunkt angesehen werden. Wird nun ein Druck an einem der Reservoire angelegt, sodass $P_1 \neq P_2$, ergibt sich die in der Figur dargestellte Situation ($P_1 > P_2$), dass die Füllhöhen nicht mehr gleich sind, sondern mit entgegengesetztem Vorzeichen um eine Höhe h von der mittleren Höhe $h_0$ abweichen. Wie zuvor erläutert,

$$h = \frac{|P_1 - P_2|}{2 \rho g}$$

ergibt sich diese Höhe gemäß Hydrostatik gemäß mit der Dichte $\rho$ der Flüssigkeit und der Erdbeschleunigung (Ortsfaktor) g = 9,81 $m/s^2$. Mit anderen Worten, aus der gemessenen Druckdifferenz $|P_1 - P_2|$ (bzw. deren Betrag) zwischen den beiden Reservoiren ergibt sich durch genannten Zusammenhang die Füllhöhe h, insbesondere als Abweichung gegenüber dem Ausgangswert $h_0$. Die Füllhöhe kann also durch eine direkte Messung effizient und präzise bestimmt werden.

Wird nun die elektrische Kapazität für die beiden Füllhöhen $h_0$ und $h_0 \pm h$ gemessen, kann aus diesen beiden Wertepaaren eine Relation zwischen der Füllhöhe und der Kapazität ermittelt werden. Dies erlaubt eine effiziente Kalibrierung des Flüssigkeitssystems.

Zum Anlegen des Drucks an einem der Reservoire kann eine Pumpe 18 verwendet werden. Die Pumpe 18 ist im gezeigten Beispiel mit dem ersten Reservoir 11 fluidisch verbunden und erzeugt in dem ersten Reservoir 11 den Druck $P_1$. Über ein Sperrventil 19a kann die Pumpe 18 zugeschaltet werden oder wieder vom ersten Reservoir 11 getrennt werden. Das zweite Reservoir 12 kann über einen Ausfluss oder eine Öffnung eine fluidische Verbindung zur Umgebung, also insbesondere zu Atmosphärendruck, aufweisen. Der Druck $P_2$ entspricht in diesem Fall also Atmosphärendruck (da $P_1 \neq P_2$ entspricht $P_1$ nicht dem Atmosphärendruck). Diese Verbindung weist ebenfalls ein Sperrventil 19b auf, mit dem das zweite Reservoir 12 entsprechend gegenüber der Umgebung geöffnet oder abgeschlossen werden kann.

Man beachte, dass beim Anlegen des Drucks $P_1$ eine Oszillation in der Füllhöhe beider Reservoire entstehen kann, insbesondere wenn die Druckänderung schnell gegenüber charakteristischen Zeitskalen des Flüssigkeitssystems 10 vorgenommen wird. Dabei werden Frequenz, Amplitude und Art der Oszillation (überdämpft oder unterdämpft) von Systemeigenschaften wie Durchmesser der Reservoire oder Länge und/oder Durchmesser des Kanals 15 festgesetzt. Diese Eigenschaften definieren auch die genannte charakteristische Zeitskala. Eine Messung der Kapazität sollte nicht während dieser Oszillation stattfinden, da die Messung dadurch verfälscht würde. Gleiches gilt auch für eine etwaige Mittelung über mehrere Messwerte für die Kapazität zu unterschiedlichen Zeitpunkten. Dazu kann die Messung nach einer bestimmten Wartezeit durchgeführt werden, wenn die Füllhöhe im Wesentlichen zeitlich konstant ist. Die Wartezeit liegt typischerweise in der Größenordnung von Sekunden bis Minuten und kann vom fluidischen Widerstand zwischen den Reservoiren abhängen. Im Fall von geringem fluidischen Widerstand zwischen den Reservoiren beispielsweise kann die Wartezeit beispielsweise 20 bis 120 Sekunden, 30 bis 120 Sekunden oder 30 bis 60 Sekunden betragen. Im Fall von hohem fluidischen Widerstand zwischen den Reservoiren kann die Wartezeit zwischen 5 Minuten und 30 Minuten betragen.

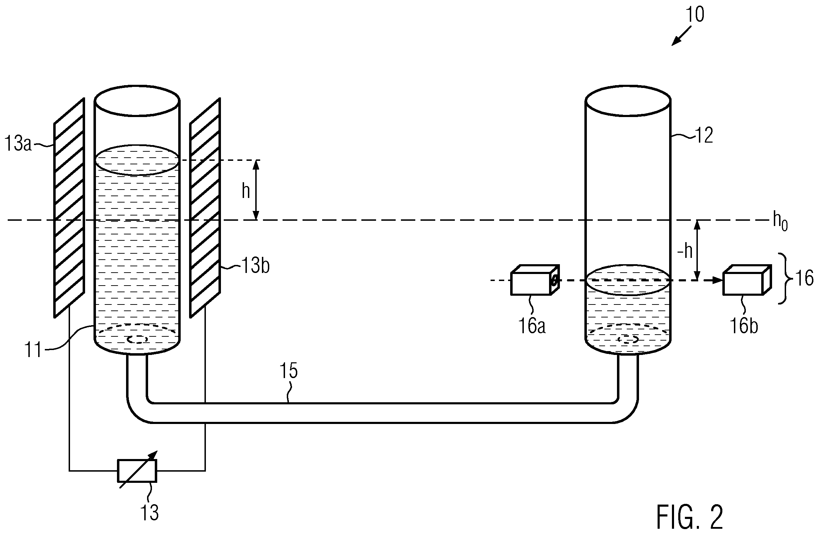

Figur 2 zeigt ein Flüssigkeitssystem 10 gemäß einem zweiten Beispiel, an dem das zuvor beschriebene Kalibrierungsverfahren durchgeführt werden kann. Da die Flüssigkeitssysteme beider Beispiele in einigen Aspekten übereinstimmen, wird an dieser Stelle, um Redundanzen zu vermeiden, lediglich auf die unterscheidenden Merkmale eingegangen. Der Hauptunterschied besteht dabei in dem Verfahren zur Bestimmung der Füllhöhe der Flüssigkeit im ersten Reservoir 11 und oder im zweiten Reservoir 12.

Zunächst sind die beiden Reservoire 11, 12 nicht zwingend gegenüber ihrer Umgebung abgeschlossen, weil das Verfahren nicht auf einer Druckdifferenz des Gases in den beiden Reservoiren basiert. Stattdessen verfügt zumindest eines der Reservoire, im gezeigten Fall das zweite Reservoir über eine Lichtschranke 16. Natürlich kann die Lichtschranke 16 an dem ersten Reservoir 11 oder es können Lichtschranken an beiden Reservoiren angeordnet sein.

Die Lichtschranke 16 umfasst eine Lichtquelle 16a und einen Lichtsensor 16b. Diese beiden Komponenten sind derart angeordnet, dass das Licht von der Lichtquelle 16a durch das zweite Reservoir 11 propagiert und dann auf den Lichtsensor 16b fällt. Die Lichtquelle 16a und der Lichtsensor 16b sind in einer horizontalen Ebene und einer bekannten Höhe angeordnet, was bedeutet, dass die Lichtschranke 16 in einer bekannten Höhe angeordnet ist. Diese bekannte Höhe ist in diesem Fall $h_0 - h$. Befindet sich keine Flüssigkeit an der bekannten Höhe im Reservoir 12 fällt eine bestimmte Lichtleistung auf den Lichtsensor 16b. Befindet sich hingegen Flüssigkeit an der bekannten Höhe im Reservoir 12, so wird das Licht von der Flüssigkeit teilweise absorbiert und/oder gestreut, sodass die von dem Lichtsensor 16b gemessene Lichtleistung geringer ist.

Eine alternative Form der Lichtschranke umfasst einen weiteren Lichtsensor, der sich ebenfalls in der horizontalen Ebene der Lichtschranke 16 befindet. Dabei sind die Komponenten der Lichtschranke 16 derart angeordnet, dass Licht von der Lichtquelle auf den Lichtsensor fällt, wenn keine Flüssigkeit in dem ersten Reservoir in der Ebene vorliegt, und dass Licht von der Lichtquelle auf den weiteren Lichtsensor fällt, wenn Flüssigkeit in dem ersten Reservoir in der Ebene vorliegt. Durch Brechung fällt dabei Licht auf den weiteren Lichtsensor, wenn es durch Flüssigkeit propagiert, also, wenn Flüssigkeit auf der Höhe der Lichtschranke 16 vorliegt.

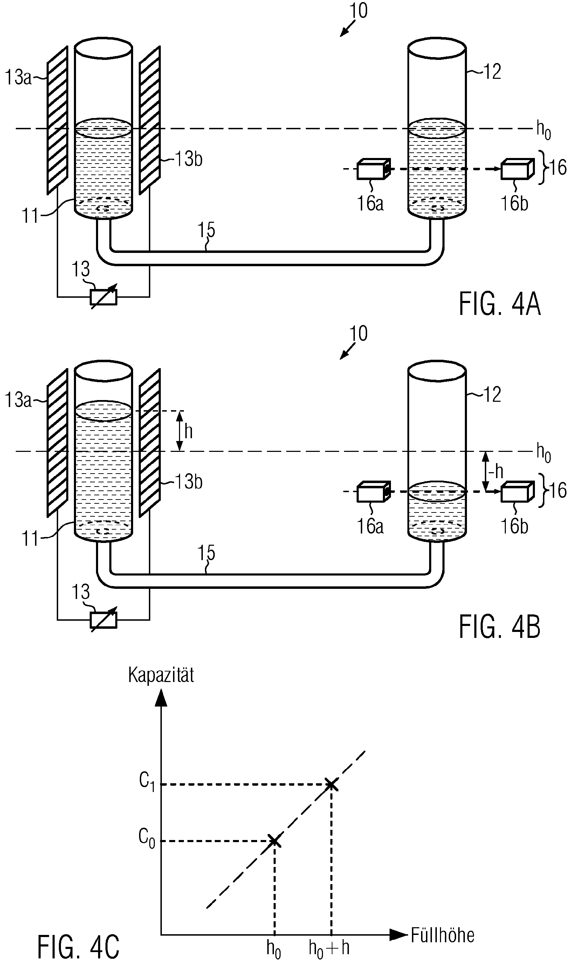

Ein Verfahren zur Kalibrierung unter Verwendung des gezeigten Flüssigkeitssystems wird nachfolgend mit Bezug auf Figuren 4A-C erläutert.

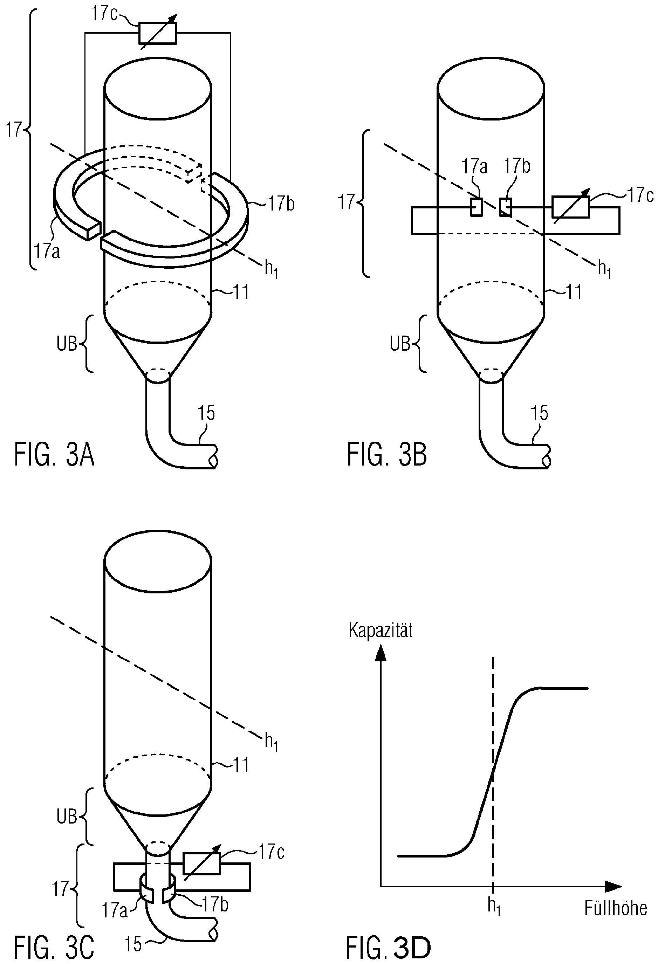

Figuren 3A bis 3C zeigen unterschiedliche Varianten einer Kapazitätsschranke 17 wie sie an dem ersten Reservoir 11 und/oder dem zweiten Reservoir 12 angeordnet werden kann. Schematisch wird die Kapazitätsschranke hier am ersten Reservoir 11 in einer vereinfachten Darstellung gezeigt, aber die Kapazitätsschranke 17 ist mit dem beschriebenen Flüssigkeitssystem kompatibel und kann beispielsweise anstelle der Lichtschranke 16 im zweiten Beispiel verwendet werden.

Die Kapazitätsschranke gemäß einer ersten Variante in Figur 3A umfasst zwei Elektroden 17a, 17b, die auf einer bekannten Höhe $h_1$ an dem Reservoir 11 angeordnet sind. Wie gezeigt, sind sie Elektroden bogenförmig und umgeben in der bekannten Höhe einen großen Teil des Umfangs des Reservoirs 11. Die beiden Elektroden 17a, 17b bilden einen Plattenkondensator und sind mit einem Kapazitätssensor 17c verbunden, der die Kapazität des Plattenkondensators und damit jenes Abschnitts des Reservoirs 11, der von der Kapazitätsschranke 17 umgeben ist, misst. Eine Kapazitätsschranke bietet gegenüber einer Lichtschranke den Vorteil, dass sie weitgehend unempfindlich gegenüber Dejustage ist. Im Vergleich muss bei einer Lichtschranke sichergestellt werden, dass das Licht der Lichtquelle auf den Lichtsensor oder die Lichtsensoren fällt. Eine solche Justage ist für die Kapazitätsschranke nicht notwendig.

Figur 3B zeigt eine Kapazitätsschranke 17 gemäß einer zweiten Variante. Hierbei sind die Elektroden bezogen auf die Größe des Reservoirs klein dimensioniert und nahe beieinander angeordnet, ohne sich zu berühren. Diese Ausführungsform hat gegenüber der zuvor genannten den Vorteil einer verbesserten Ortsauflösung (und erlaubt damit eine genauere Höhenbestimmung), besitzt aber gleichzeitig ein schlechteres Signal-zu-Rausch-Verhältnis.

In einer dritten Variante gemäß Figur 3C ist die Kapazitätsschranke 17 an dem Kanal 15 angebracht, der das erste Reservoir mit dem zweiten Reservoir (nicht gezeigt) verbindet. Dabei kann die Kapazitätsschranke 17 als Clip gestaltet sein, in den der Kanal 15 eingelegt wird/ist. Es wird also die Kapazität der Füllung eines Abschnitts des Kanals 15 gemessen, wobei dieser Abschnitt eine Länge im Bereich zwischen 1 mm und 1 cm aufweist (entsprechend bedeckt der Clip eine Länge des Kanals 15 im Bereich zwischen 1 mm und 1 cm). Um bei der Verwendung dieser Variante der Kapazitätsschranke 17 eine Volumenänderung berechnen zu können, muss die Geometrie in dem Übergangsbereich UB zwischen dem Reservoir 11 und dem Kanal 15 bekannt sein. Dies gilt ebenfalls für den Übergangsbereich zwischen dem zweiten Reservoir und dem Kanal.

Diese Variante der Kapazitätsschranke 17 erlaubt durch eine verbesserte Ortsauflösung eine präzise Messung der Füllhöhe in dem zweiten Reservoir und dient gleichzeitig als Schutz vor einem Leerlaufen des ersten Reservoirs 11.

Das in Figur 3D dargestellte Diagramm zeigt einen schematischen Verlauf der gemessenen Kapazität in Abhängigkeit der Füllhöhe des Reservoirs 11. Liegt die Füllhöhe der Flüssigkeit unterhalb der Höhe $h_1$ der Kapazitäts- schranke, ist die gemessene Kapazität niedrig, weil Gas in dem Reservoir eine geringe Kapazität besitzt. Liegt die Füllhöhe oberhalb der Höhe $h_1$ der Kapazitätsschranke, ist die gemessene Kapazität hoch, weil die Flüssigkeit in dem Reservoir eine höhere Kapazität als das Gas besitzt (wegen der unterschiedlichen elektrischen Permeabilität zwischen der Flüssigkeit und dem Gas). Liegt die Füllhöhe der Flüssigkeit um die Höhe $h_1$, ist die zugehörige Änderung der Kapazität am höchsten. Direkt an der Höhe $h_1$ liegt ein Wendepunkt (Nullstelle der ersten Ableitung) der Kapazitätskurve als Funktion der Füllhöhe. Dieser Punkt ist in einer Auswertung der Messwerte leicht zu ermitteln, sodass eine Kapazitätsschranke eine präzise Methode darstellt, eine bestimmte Füllhöhe zu ermitteln. In diesem Fall kann sehr genau ermittelt werden, wann die Füllhöhe den Wert $h_1$ erreicht.

Die Figuren 4A-C skizzieren ein Kalibrierungsverfahren unter Verwendung des Flüssigkeitssystems 10 gemäß dem zweiten Beispiel mit einer Lichtschranke. Die bereits genannten strukturellen Merkmale des Flüssigkeitssystems 10 werden hierzu nicht mehr erläutert.

In einem ersten Schritt wird das Flüssigkeitssystem 10 in einem Zustand präpariert, in dem die Füllhöhe der Flüssigkeit in dem ersten Reservoir 11 bekannt ist. Dies kann beispielsweise über eine Füllvorschrift für einen Anwender erreicht werden oder diese Füllhöhe wird separat (manuell) ausgemessen. Da das erste Reservoir 11 und das zweite Reservoir 12 über den Kanal 15 kommunizierend verbunden sind, ist die Füllhöhe in den beiden Reservoiren identisch und wird mit $h_0$ bezeichnet (siehe Figur 4A). Für diese Füllhöhe h0 wird nun in einem zweiten Schritt mittels des Kapazitätssensors 13 die elektrische Kapazität des ersten Reservoirs 11, bzw. jenes Abschnitts des ersten Reservoirs 11, der von den Elektroden (Leiterplatten 13a, 13b) umgeben ist, gemessen. Dieser Messwert $C_0$ für die Kapazität und $h_0$ bilden ein erstes Wertepaar.

In einem dritten Schritt wird nun die Füllhöhe in dem ersten Reservoir 11 (und damit auch dem zweiten Reservoir 12) geändert, sodass die neue Füllhöhe in dem zweiten Reservoir 12 der bekannten Höhe ($h_0$ - h) der Lichtschranke 16 entspricht. Da es sich dabei um eine bekannte Füllhöhe handelt, muss diese nicht separat bestimmt werden. Nun wird ein einem vierten Schritt erneut die Kapazität C, an dem ersten Reservoir 11 gemessen. Da die beiden Röhren kommunizieren, beträgt die Füllhöhe im ersten Reservoir 11 gerade ($h_0$ + h), siehe Figur 4B. C, und ($h_0$ + h) bilden ein zweites Wertepaar.

Der fünfte Schritt ist nun in Figur 4C dargestellt. Hier sind die beiden bestimmten Wertepaare als Punkte (durch x markiert) in ein Diagramm eingetragen, in dem die Kapazität C als gegen die Füllhöhe h aufgetragen ist. Durch die beiden Punkte kann eine extrapolierende Gerade gelegt werden, sodass ein (funktioneller) Zusammenhang als Relation zwischen der Füllhöhe und der Kapazität ermittelt werden kann. In diesem Fall gilt also ein linearer Zusammenhang $C(h) = a + b \cdot h$ mit Parametern a und b.

Es sei erwähnt, dass das beschriebene Verfahren in analoger Weise auch mit einer Kapazitätsschranke anstelle der Lichtschranke 16 durchgeführt werden kann. Ebenso kann das beschriebene Verfahren im Zusammenspiel mit einem Flüssigkeitssystem gemäß dem ersten Beispiel, also mit einem Differenzdrucksensor durchgeführt werden.

Ausgehend von dieser statischen Kalibration kann nun in einem dynamischen Flüssigkeitssystem, in dem sich die Füllhöhe als Funktion der Zeit t ändert, der Fluss $\Phi$ ermittelt werden. Wie zuvor beschrieben, bezeichnet der Fluss eine

$$A \cdot \frac{d}{dt} h(t)$$

Volumenänderung pro Zeit, der definiert ist als $\Phi =$ , d/dt bezeichnet die Ableitung nach der Zeit t. Auf Basis der ermittelten Relation zwischen der Kapazität und der Füllhöhe ergibt sich der Fluss daher zu

$$\Phi(t) = A \cdot B \cdot \frac{d}{dt} C(t)$$

mit $B = 1/b$ einem Parameter, der sich aus der Kalibration ergibt.

Schließlich kann der Fluss lediglich aus einer Messung der Kapazität gewonnen werden, Daher ist der Fluss in Echtzeit und mit großer Präzision zu ermitteln, was in bestimmten Anwendungen vorteilhaft und wichtig sein kann. Darüber hinaus ist es möglich, auf Basis eines einzigen Messwerts den Fluss zu steuern, beispielsweise über eine Feedback-Schleife.

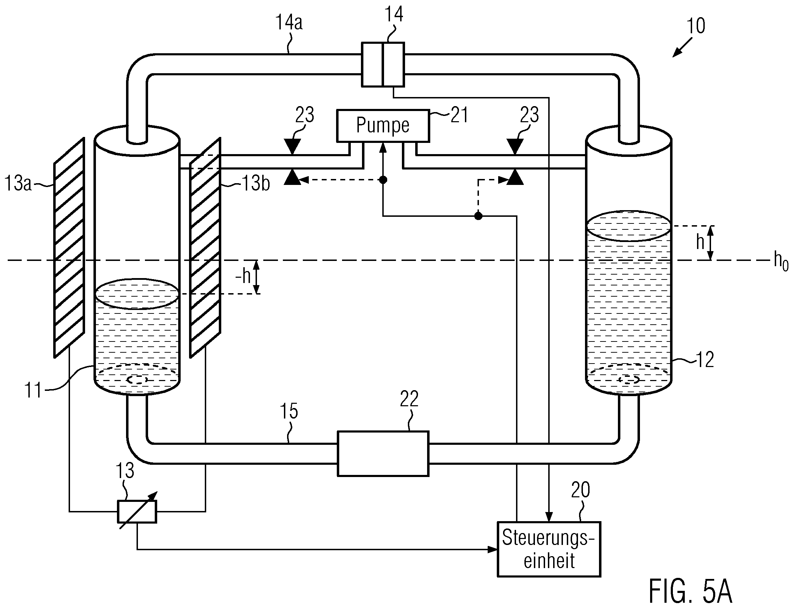

Weiterhin ist in Figur 5A ein erfindungsgemäßes Flüssigkeitssystem 10 gemäß einer ersten Ausführungsform gezeigt. Neben den bereits erläuterten Elementen umfasst das Flüssigkeitssystem 10 eine Steuerungseinheit 20, die ausgebildet ist, das hierin beschriebene erfindungsgemäße Kalibrierungsverfahren unter Bestimmung einer Druckdifferenz zwischen den beiden Reservoiren an dem Flüssigkeitssystem 10 durchzuführen.

Eine Pumpe 21 ist mit den beiden Reservoiren verbunden und ausgebildet, den Gasdruck in den beiden Reservoiren zu steuern. Durch die Steuerung des Gasdrucks hat die Pumpe 21 direkten Einfluss auf die Füllhöhe in den Reservoiren und die durch den Kanal transportierte Flüssigkeitsmenge. Dabei kann die Pumpe 21 ausgebildet sein, in den beiden Reservoiren unterschiedliche Drücke anzulegen bzw. den Druck in den beiden Reservoiren unabhängig voneinander zu steuern. Beispielsweise kann im ersten Reservoir 11 ein bestimmter Druck $P_1$ angelegt werden, während im zweiten Reservoir 12 Umgebungsdruck oder Atmosphärendruck angelegt wird. Insbesondere entspricht P1 nicht dem Atmosphärendruck. Außerdem umfasst das Flüssigkeitssystem 10 einen Mikrofluidchip 22 an dem Kanal 15, sodass der Mikrofluidchip 22 von der Flüssigkeit durchströmt werden kann. In dem Mikrofluidchip befinden sich beispielsweise Zellkulturen oder Gewebeproben, deren Verhalten unter einem bestimmten Fluss studiert werden soll.

Die Steuerungseinheit 20 empfängt Signale und/oder Daten vom Kapazitätssensor 13 und dem Differenzdrucksensor 14 und ist ausgebildet, die Pumpe 21 zu steuern. Ebenso kann das Flüssigkeitssystem 10 Ventile 23 umfassen, um die Reservoire auch gegenüber der Pumpe abzuschließen. Diese Ventile können auch von der Steuerungseinheit angesteuert werden (z.B. geöffnet und geschlossen werden). Auf diese Weise ist die Steuerungseinheit 20 ausgebildet, das zuvor beschriebene Kalibrierungsverfahren an dem Flüssigkeitssystem 10 durchzuführen. Zur Erläuterung wird auf die vorstehend benannten Verfahrensschritte Bezug genommen:

Schritt A): Der Differenzdrucksensor 14 übermittelt die Druckdifferenz zwischen den beiden Reservoiren und die Steuerungseinheit berechnet daraus die Differenz in der Füllhöhe zwischen den beiden Reservoiren.

Schritt B): Der Kapazitätssensor 13 misst die Kapazität am ersten Reservoir 11 und übermittelt den Messwert an die Steuerungseinheit 20.

Schritt C): Die Steuerungseinheit 20 steuert die Pumpe 21 an, um eine neue Füllhöhe einzustellen, indem die Pumpe 21 den Druck in dem ersten Reservoir 11 und/oder dem zweiten Reservoir 12 verändert.

Schritt D): Wiederholen der Schritte A) und B).

Schritt E): Die Steuerungseinheit 20 ermittelt eine Relation zwischen den Füllhöhen in dem Reservoir 11 und den gemessenen elektrischen Kapazitäten.

Bei der Steuerungseinheit 20 kann es sich um einen Computer handeln, der die notwendigen Anweisungen zur Durchführung des Verfahrens implementiert hat.

Das Kalibrierungsverfahren kann folglich automatisiert durchgeführt werden und bedarf keiner manuellen Einstellungen durch einen Benutzer. Die ermittelten Kalibrationsparameter können in einem Speicher (extern oder innerhalb der Steuerungseinrichtung) abgelegt/gespeichert werden.

Darüber hinaus kann in diesem Flüssigkeitssystem 10 nach der Kalibration aus den von dem Kapazitätssensor 13 bereitgestellten Daten und den Kalibrationsparametern auch der Fluss bestimmt werden, indem die Steuerungseinheit die zuvor offenbarten Schritte zur Berechnung des Flusses durchführt. In diesem Zusammenhang kann der Fluss durch den Mikrofluidchip gesteuert werden, indem die Steuerungseinheit die Pumpe 21 steuert, um einen bestimmten Fluss zu erreichen. Mit der Implementierung einer Regelschleife zwischen dem Kapazitätssensor 13, der Steuerungseinheit 20 und der Pumpe 21 kann der Fluss auch aktiv geregelt werden.

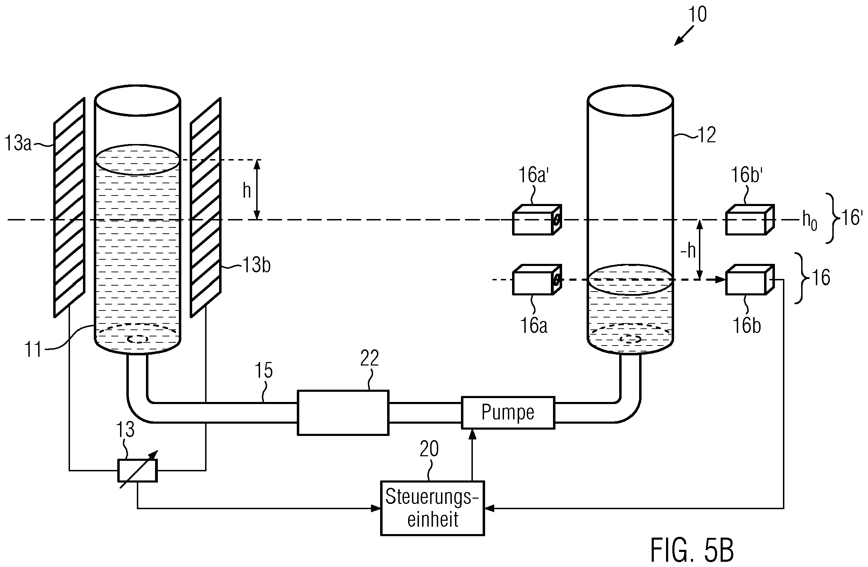

Schließlich zeigt Figur 5B ein Flüssigkeitssystem 10 gemäß einer zweiten Ausführungsform. Dieses unterscheidet sich von der ersten Ausführungsform zunächst dahingehend, dass zur Bestimmung der Füllhöhe der Flüssigkeit eine Lichtschranke 16 an dem zweiten Reservoir 12 an einer bekannten Höhe $h_0$-h eingesetzt wird. Das beschriebene Kalibrierungsverfahren unter Verwendung einer Lichtschranke kann an diesem Flüssigkeitssystem 10 durchgeführt werden. Entsprechend sind kein Differenzdrucksensor und kein zugehöriger Gaskanal vorgesehen und die Reservoire müssen grundsätzlich gegenüber ihrer Umgebung nicht abgeschlossen sein. Darüber hinaus ist die Pumpe an dem Kanal 15 angeordnet und ausgebildet, die Flüssigkeit zwischen dem ersten Reservoir 11 und dem zweiten Reservoir 12 durch den Kanal 15 zu fördern.

Das Flüssigkeitssystem 10 umfasst zudem eine an dem zweiten Reservoir 12 angeordnete zweite Lichtschranke 16' mit einer Lichtquelle 16a' und einem Lichtsensor 16b' an der ebenfalls bekannten Höhe $h_0$. Diese Anordnung ermöglicht die Kalibrierung der Kapazität an zwei Füllhöhen des zweiten Reservoirs 12. Wie bereits erläutert, ist es möglich, aus zwei Wertepaaren die Kalibration und daraus den Fluss zu ermitteln. Das gezeigte Flüssigkeitssystem 10 stellt also eine Möglichkeit zur Flussbestimmung auf Basis einer Kalibration gemäß dem beschriebenen Verfahren dar.

Es ist ebenso möglich, mehr als zwei Lichtschranken in bekannten Höhen $h_i$ an dem zweiten Reservoir 12 anzuordnen.

Es versteht sich, dass die eine oder mehreren Lichtschranken auch an dem ersten Reservoir 11 angeordnet sein können. Dabei ist in diesem Beispiel zu beachten, dass die Lichtschranke(n) nicht durch den Kapazitätssensor 13 behindert werden.

Bezüglich des Kalibrierungsverfahrens unter Verwendung eines Flüssigkeitssystems 10 mit einer Lichtschranke wird auf die vorstehenden Ausführungen verwiesen. Zudem können einige Schritte analog zum beschriebenen Flüssigkeitssystem 10 der ersten Ausführungsform angewandt werden. Insgesamt bietet auch dieses Flüssigkeitssystem 10 der zweiten Ausführungsform jene Vorteile einer automatisierten Kalibrierung des Systems und die Möglichkeit zur Implementierung einer Regelschleife zur Regelung des Flusses durch den Mikrofluidchip 41.

**Patentansprüche**

1. Kalibrierungsverfahren für ein Flüssigkeitssystem (10), wobei das Flüssigkeitssystem (10) umfasst:

   ein mit einer Flüssigkeit befülltes Reservoir (11), und
   einen Kapazitätssensor (13), der ausgebildet ist, eine elektrische Kapazität an dem Reservoir (11) zu messen,

   wobei das Verfahren die folgenden Schritte umfasst:

   A) Bestimmen einer Füllhöhe der Flüssigkeit in dem Reservoir (11);
   B) Messen, mit dem Kapazitätssensor (13), der elektrischen Kapazität an dem Reservoir (11) für die im Schritt A) bestimmte Füllhöhe der Flüssigkeit;
   C) Einstellen einer anderen Füllhöhe in dem Reservoir (11),
   D) Wiederholen der Schritte A) und B), und
   E) Ermitteln einer Relation zwischen den Füllhöhen in dem Reservoir (11) und den gemessenen elektrischen Kapazitäten.

2. Verfahren nach Anspruch 1, wobei das Flüssigkeitssystem (10) weiterhin umfasst:

   ein mit einer Flüssigkeit befülltes weiteres Reservoir (12), und
   einen Kanal (15), der das Reservoir (11) und das weitere Reservoir (12) flüssigkeitsdicht verbindet, sodass das Reservoir (11) und das weitere Reservoir (12) bezüglich der Flüssigkeit kommunizierende Reservoire sind,
   wobei jedes der beiden Reservoire (11, 12) mit einer Flüssigkeit und einem Gas befüllt ist,
   wobei die beiden Reservoire (11, 12) gegenüber ihrer Umgebung abgeschlossen sind; und
   wobei Schritt A) umfasst:

   Bestimmen eines Druckunterschieds zwischen dem Gas in dem Reservoir (11) und dem Gas in dem weiteren Reservoir (12), und
   Bestimmen der Füllhöhe in dem Reservoir aus dem Differenzdruck.

3. Verfahren nach Anspruch 2,
   wobei das Messen des Druckunterschieds nach einer Wartezeit durchführt wird, insbesondere, wenn das Flüssigkeitssystem (10) einen Gleichgewichtszustand erreicht hat, in dem der Druckunterschied im Wesentlichen zeitlich konstant ist.

4. Verfahren nach Anspruch 3, wobei der Druckunterschied an mehreren Zeitpunkten nach der Wartezeit gemessen und die gemessenen Werte der mehreren Zeitpunkte gemittelt werden.

5. Verfahren nach einem der Ansprüche 2 bis 4, weiterhin umfassend:

   Abschätzen eines durch die unterschiedliche Füllhöhe in den beiden Reservoiren (11, 12) erwarteten Drucks;
   Anlegen eines Gasdrucks an dem Reservoir (11); und
   Öffnen des weiteren Reservoirs (12) zu einer Umgebung, sodass ein dortiger Gasdruck dem Atmosphärendruck entspricht,
   wobei der an dem Reservoir (11) angelegte Gasdruck dem durch die unterschiedliche Füllhöhe abgeschätzten Druck entspricht.

6. Verfahren nach Anspruch 1, wobei das Flüssigkeitssystem (10) weiterhin eine an dem Reservoir (11) angeordnete Lichtschranke (16) umfasst,

   wobei die Lichtschranke (16) in einer ersten bekannten Höhe angeordnet ist,
   wobei die Lichtschranke (16) umfasst:

   eine Lichtquelle (16a), insbesondere eine Laserdiode; und
   einen Lichtsensor (16b); und

   wobei Schritt A) das Einstellen der Füllhöhe in dem Reservoir (11) auf eine bekannte Höhe umfasst, und
   wobei der Schritt C) das Ändern der Füllhöhe der Flüssigkeit in dem Reservoir (11), sodass die Füllhöhe in dem Reservoir (11) der ersten bekannten Höhe der Lichtschranke (16) entspricht, umfasst.

7. Verfahren nach Anspruch 6, wobei die Lichtschranke (16) einen weiteren Lichtsensor umfasst, und wobei die Lichtquelle (16a), der Lichtsensor (16b) und der weitere Lichtsensor in einer horizontalen Ebene derart angeordnet sind, dass Licht von der Lichtquelle (16a) auf den Lichtsensor (16b) fällt, wenn keine Flüssigkeit in dem ersten Reservoir (11) in der Ebene vorliegt, und dass Licht von der Lichtquelle (16b) auf den weiteren Lichtsensor fällt, wenn Flüssigkeit in dem ersten Reservoir (11) in der Ebene vorliegt.

8. Verfahren nach Anspruch 6 oder 7, wobei das Flüssigkeitssystem (10) ein weiteres Reservoir (12) und einen Kanal (15), der das Reservoir (11) und das weitere Reservoir (12) gas- und flüssigkeitsdicht verbindet, sodass das Reservoir (11) und das weitere Reservoir (12) kommunizierende Reservoire sind, umfasst.

9. Verfahren nach einem der Ansprüche 6 bis 8, wobei die erste bekannte Höhe der Lichtschranke (16) geringer ist als die bekannte Füllhöhe in dem Reservoir (11), und
   wobei insbesondere die Lichtschranke (16) zur Feststellung des Leerlaufens des Reservoirs (11) genutzt wird.

10. Verfahren nach einem der Ansprüche 6 bis 9, wobei eine weitere Lichtschranke in einer weiteren bekannten Höhe an dem Reservoir (11) angeordnet ist, und
    wobei das Flüssigkeitssystem (10) weiterhin derart präpariert wird, dass die Füllhöhe in dem Reservoir (11) der weiteren bekannten Höhe entspricht.

11. Verfahren nach Anspruch 1, wobei das System weiterhin eine an dem Reservoir (11) angeordnete Kapazitätsschranke (17) umfasst,

    wobei die Kapazitätsschranke (17) in einer ersten bekannten Höhe angeordnet ist, und
    wobei Schritt A) das Einstellen der Füllhöhe in dem Reservoir (11) auf eine bekannte Höhe umfasst, und
    wobei der Schritt C) das Ändern der Füllhöhe der Flüssigkeit in dem Reservoir (11), sodass die Füllhöhe in dem Reservoir (11) der ersten bekannten Höhe der Kapazitätsschranke (17) entspricht, umfasst.

12. Verfahren nach Anspruch 11, wobei das Flüssigkeitssystem (10) ein weiteres Reservoir (12) und einen Kanal (15), der das Reservoir (11) und das weitere Reservoir (12) gas- und flüssigkeitsdicht verbindet, sodass das Reservoir (11) und das weitere Reservoir (12) kommunizierende Reservoirs sind, umfasst.

13. Verfahren nach einem der vorangegangenen Ansprüche, weiterhin umfassend die Ermittlung eines Flusses, umfassend:

    dynamische Entwicklung des Flüssigkeitssystems (10), in der sich die Füllhöhe in dem Reservoir (11) zeitlich ändert, und
    Ermitteln des Flusses aus der ermittelten Relation zwischen den Füllhöhen in dem Reservoir (11) und den gemessenen elektrischen Kapazitäten, einem zeitlichen Verlauf der von dem Kapazitätssensor (13) gemessenen elektrischen Kapazität und bekannten geometrischen Abmessungen des ersten Reservoirs (11).

14. Flüssigkeitssystem (10), umfassend:

    ein erstes mit einer Flüssigkeit befülltes Reservoir (11),

ein zweites mit einer Flüssigkeit befülltes Reservoir (12),

einen Kanal (15), der das erste Reservoir (11) und das zweite Reservoir (12) flüssigkeitsdicht verbindet, sodass das erste Reservoir (11) und das zweite Reservoir (12) bezüglich der Flüssigkeit kommunizierende Reservoire sind,

einen Kapazitätssensor (13), der ausgebildet ist, die elektrische Kapazität an dem ersten Reservoir (11) und/oder dem zweiten Reservoir (12) zu messen,

zumindest eines von

einem Differenzdrucksensor (13) zur Messung einer Druckdifferenz zwischen dem ersten Reservoir (11) und dem zweiten Reservoir (12),

einer Lichtschranke (16), die in einer ersten bekannten Höhe an dem ersten Reservoir (11) oder dem zweiten Reservoir (12) angeordnet ist und eine Lichtquelle (16a) und einen Lichtsensor (16b) umfasst, und

einer Kapazitätsschranke (17), die in einer ersten bekannten Höhe an dem ersten Reservoir (11) oder dem zweiten Reservoir (12) angeordnet ist, und

eine Steuerungseinheit (20), die ausgebildet ist, das Verfahren nach einem der Ansprüche 2 bis 5 und 7 bis 10 und 12 bis 13 durchzuführen.

15. Flüssigkeitssystem (10) nach Anspruch 14, weiterhin umfassend,

eine Pumpe (21), die ausgebildet ist, die Flüssigkeit zwischen dem ersten Reservoir (11) und dem zweiten Reservoir (12) zu transportieren, und/oder

einen Mikrofluidchip (22), der von der Flüssigkeit durchströmt wird.

FIG. 1

FIG. 2

FIG. 3A

FIG. 3B

FIG. 3C

FIG. 3D

FIG. 4A

FIG. 4B

FIG. 4C

FIG. 5A

FIG. 5B

EP 4 521 076 A1

Europäisches Patentamt
European Patent Office
Office européen des brevets

# EUROPÄISCHER RECHERCHENBERICHT

Nummer der Anmeldung

**EP 23 19 6001**

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X | US 10 564 025 B2 (OLDFIELD BARRY J [US]; HENN NISSIM [IL] ET AL.) 18. Februar 2020 (2020-02-18) | 1,11-15 | INV. G01F23/263 G01F23/292 |
| Y | * Abbildungen 1, 2 * | 6-10 | G01F25/20 |
| A |  | 2-5 | |
| | ----- | | |
| X | US 2019/120679 A1 (SHARMA AKSHAT [US] ET AL) 25. April 2019 (2019-04-25) * Abbildungen 1A, 1B * * Absatz [0035] – Absatz [0036] * | 1 | |
| | ----- | | |
| Y | US 10 871 426 B2 (ABBOTT LAB [US]) 22. Dezember 2020 (2020-12-22) * Abbildung 3 * | 6-10 | |
| | ----- | | |
| A | US 2009/038393 A1 (CHAUNG CHUN-CHIH [TW] ET AL) 12. Februar 2009 (2009-02-12) * Abbildung 2 * | 12,14 | |
| | ----- | | |
| A | CN 111 157 082 B (SHENZHENZHONGKEHUAGONG TECH CO LTD) 27. April 2021 (2021-04-27) * Abbildung 1 * | 1-15 | RECHERCHIERTE SACHGEBIETE (IPC) |
| | ----- | | G01F |

Der vorliegende Recherchenbericht wurde für alle Patentansprüche erstellt

| Recherchenort | Abschlußdatum der Recherche | Prüfer |
|---|---|---|
| Den Haag | 8. Februar 2024 | Régert, Tamás |

EPO FORM 1503 03.82 (P04C03)

**ANHANG ZUM EUROPÄISCHEN RECHERCHENBERICHT
ÜBER DIE EUROPÄISCHE PATENTANMELDUNG NR.**

EP 23 19 6001

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

08-02-2024

| Im Recherchenbericht angeführtes Patentdokument | Datum der Veröffentlichung | Mitglied(er) der Patentfamilie | Datum der Veröffentlichung |
|---|---|---|---|
| US 10564025 B2 | 18-02-2020 | US 2013297235 A1 | 07-11-2013 |
| | | WO 2012102701 A1 | 02-08-2012 |
| US 2019120679 A1 | 25-04-2019 | CA 3079752 A1 | 02-05-2019 |
| | | EP 3701254 A1 | 02-09-2020 |
| | | US 2019120679 A1 | 25-04-2019 |
| | | WO 2019084573 A1 | 02-05-2019 |
| US 10871426 B2 | 22-12-2020 | CN 109983310 A | 05-07-2019 |
| | | EP 3532807 A1 | 04-09-2019 |
| | | JP 7012731 B2 | 14-02-2022 |
| | | JP 2019537734 A | 26-12-2019 |
| | | US 2018143111 A1 | 24-05-2018 |
| | | US 2021123839 A1 | 29-04-2021 |
| | | WO 2018081142 A1 | 03-05-2018 |
| US 2009038393 A1 | 12-02-2009 | TW 200907306 A | 16-02-2009 |
| | | US 2009038393 A1 | 12-02-2009 |
| CN 111157082 B | 27-04-2021 | KEINE | |

Für nähere Einzelheiten zu diesem Anhang : siehe Amtsblatt des Europäischen Patentamts, Nr.12/82

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 1944084 A1